# EUROPEAN PATENT APPLICATION

(11) **EP 1 739 341 A1**
(43) Date of publication of application: **03.01.2007**
(21) Application number: 05730366.1
(22) Date of filing: 12.04.2005
(51) Int. Cl.: F21S 2/00, F21V 29/00, G03B 21/14, H01J 61/35, F21Y 101/00

(54) **LIGHT SOURCE DEVICE, ILLUMINATION OPTICAL DEVICE, AND DISPLAY DEVICE**

(30) Priority: 15.04.2004 JP 2004120136
(71) Applicant: Matsushita Electric Industrial Co., Ltd., Kadoma-shi Osaka 571-8501 (JP)
(72) Inventor: WADA, Mitsuhiro Matsushita Electric Industrial Co, Osaka-shi Osaka 540-6319 (JP); OOYA, Tomoyuki Matsushita Electric Industrial Co, Osaka-shi Osaka 540-6319 (JP)
(74) Representative: TBK-Patent
(86) International application number: PCT/JP2005/007090
(87) International publication number: WO 2005/108854

(57) **Abstract**

A transmissive sealing member **18** is provided on an exit opening portion of an ellipsoidal mirror **11** and forms a sealed space inside the ellipsoidal mirror **11.** A light shielding member **12a** is formed on a surface of the transmissive sealing member **18** on a side of a discharge lamp **10.** The ellipsoidal mirror **11** condenses the light emitted from the discharge lamp **10** and outputs the light to the outside. The light shielding member **12a** shields the light, which is reflected and returns toward the discharge lamp **10,** of the light emitted from the ellipsoidal mirror **11** to the outside. In this way, temperature rise of parts of the discharge lamp **10** is suppressed and reliability of a light source device **17a** is improved.

## Description

### TECHNICAL FIELD

The present invention relates to a light source device which reflects light emitted from a light source and outputs the light, an illumination optical device and a display device using the light source device.

### BACKGROUND ART

Conventionally, projection type display devices using various spatial light modulating elements have been known. Such a device employs a transmissive or reflective liquid crystal panel, for example, as a spatial light modulating element to illuminate the liquid crystal panel by light sources while an optical image corresponding to a video signal supplied from the outside is formed on the liquid crystal panel. The optical image is expanded and projected on a screen by a projection lens.

In recent years, as needs for high luminance grow, three-plate type projection display devices which uses three spatial light modulating elements such as liquid panels have become dominant. However, since such a projection type display device has to employ three liquid crystal panels or the like, a problem that the cost for the entire device increases occurs.

On the other hand, a single-plate type projection display device which uses only one liquid crystal panel in order to reduce the cost is known (for example, see Japanese Laid-Open Publication No. 59-230383). However, such a projection display device has to include a color filter of three primary colors on each of pixels on the liquid crystal panels. Thus, there is a problem that a resolution is deteriorated essentially. There is also a problem that 2/3 of the illumination is lost at the color filters, and thus, the screen luminance is deteriorated.

For solving such problems, a projection display device of a color sequential method using color wheel of a disc shape as described in, for example, Japanese Laid-Open Publication No. 2000-98272 is known. In this method, one modulation element is sequentially illuminated by light of three primary colors, i.e., red, green, and blue, to display a full color image.

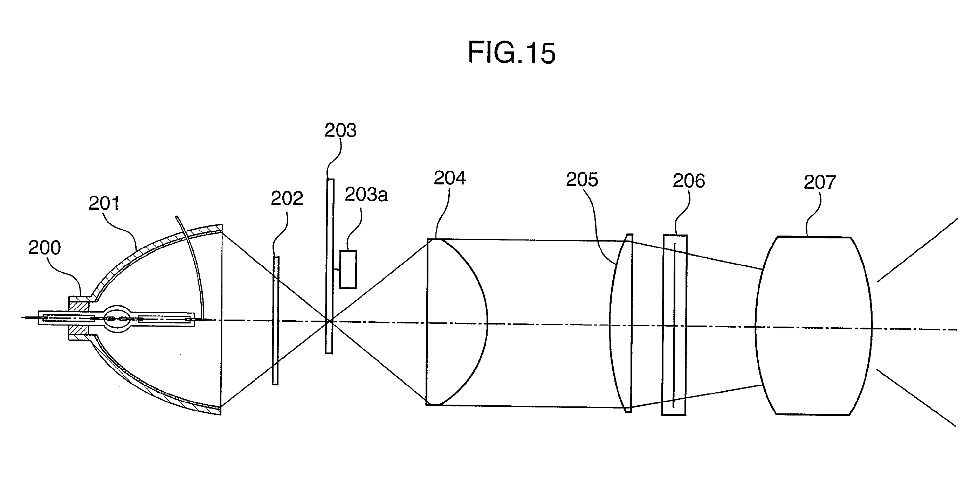

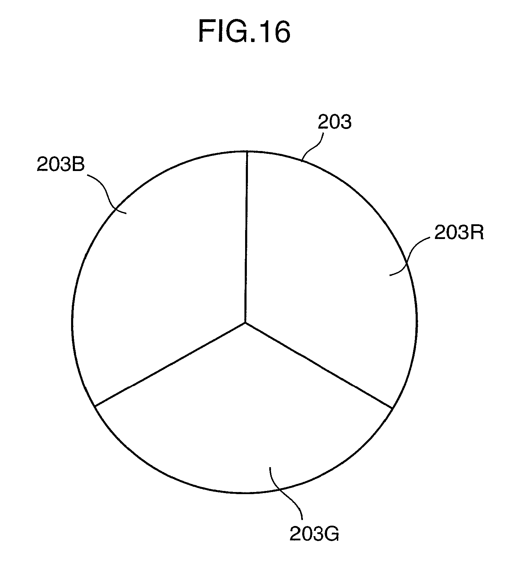

Figure **15** is a schematic diagram for showing a structure of the above conventional display structure. Figure **16** is a schematic diagram showing a structure of a color wheel shown in Figure **15.**

As shown Figure **15,** white light emitted from a discharge lamp **200** is condensed on a color wheel **203** by using an ellipsoidal mirror **201.** An UV-IR cut filter **202** is used for removing ultraviolet ray and infrared ray from the emitted light from the discharge lamp **200.** The color wheel **203** is formed by combining color filters **203R, 203G,** and **203B** which are sectors of red, green and blue into a disc shape as shown in Figure **16**. By rotating a motor **203a,** light of bands of red, green and blue can be selectively transmitted sequentially.

The emitted light of the discharge lamp **200** illuminates upon a liquid crystal panel **206** through the color wheel **203,** a condensing lens **204** and a field lens **205** for illumination. The color wheel **203** is rotated in synchronization with display of an image on the liquid crystal panel **206,** optical images corresponding to red, green and blue video signals are displayed on the liquid crystal panel **206** in a time division manner.

The field lens **205** is used for efficiently condensing light passes through the liquid crystal panel **206** on a projection lens **207.** The projection lens **207** expands the optical image on the liquid crystal panel **206** and projects on a screen (not shown). A large screen image displayed in full color is obtained. According to this method, color images with a resolution as high as that in the three-plate type device can be achieved using one liquid crystal panel. Since it is no longer necessary to provide small filters on the pixels on the liquid crystal panel **206,** yield of the liquid crystal panel **206** will increase, and the cost of the projection display device can be reduced.

### DISCLOSURE OF THE INVENTION

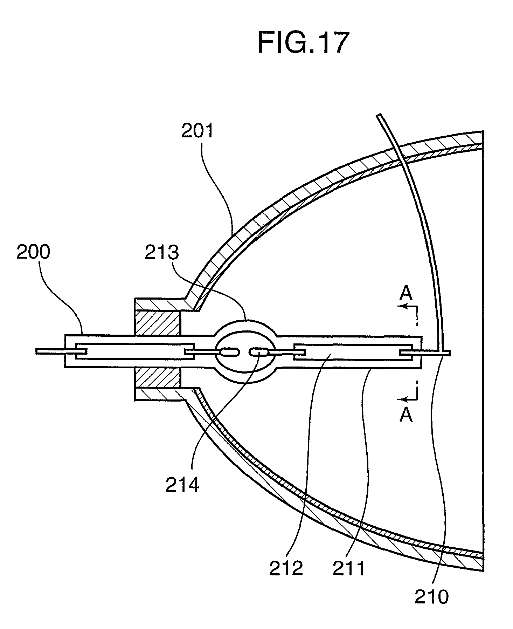

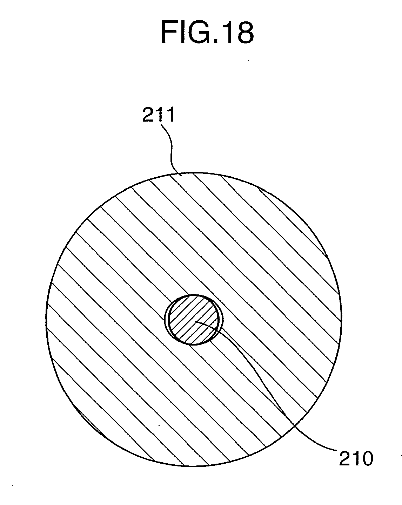

A light source device for the projection display device as described above is required to have high reliability (long life). However, the light source of the conventional projection display device shown in Figure **15** has problems as described below. Figure **17** is a partially sectional view showing a structure of the light source shown in Figure **15.** Figure **18** is an enlarged cross-sectional view of a portion cut along line A-A shown in Figure **17.**

First, there is a problem that wire may break due to oxidation of metal foil or external conductor provided in the discharge lamp and the reliability of the light source device decreases. In the discharge lamp **200** shown in Figure **17,** as shown in Figure **18,** distortion may be generated due to thermal stress between an external conductor **210** and a sealing portion **211** during sealing, and a gap is generated. Thus, the external conductor **210** and/or ends of metal foil **212** on the external conductor **210** side are in contact with air. The oxidation of these portions is promoted under an extremely high temperature condition while the lamp is lit. A time period until wire breaking happens by oxidation varies depending upon temperature. For example, when the metal foil **212** is formed using molybdenum, it takes about 2000 hours under condition of 350°C in air.

In general, the discharge lamp **200** used in the projection display device experiences an extremely high temperature while being lit. A luminous tube **213** experiences a temperature near 1000°C at maximum. Therefore, thermal conduction from the luminous tube **213** and thermal conduction from an electrode **214** cause a temperature near the connection portion between the metal foil **212** and the external conductor **210** to reach several hundreds degrees. By forcing air cooling by a fan or the like, the temperature can be reduced. However, if the temperature of the luminous tube **213** is also reduced, evaporation of a light emitting metal is suppressed, and light emitting efficiency is decreased. Thus, extremely local cooling is required, which is difficult. When the lamp has to be used in a sealed state, forced air cooling by a fan cannot be used.

For solving such a problem, in the conventional light source device, the metal foil has a sufficient length to put a portion of the discharge lamp which is readily oxidized as far as possible from the luminous tube. This causes the temperature rise by thermal conduction to be small and suppresses breaking of wire due to oxidation.

The white light emitted from the discharge lamp **200** is condensed on the color wheel **203** using the ellipsoidal mirror **201.** For example, when the white light is condensed on the red color filter **203R** on the color wheel **203,** red color component passes, but green color component and blue color component are reflected and illuminate upon the sealing portion **211** of the discharge lamp **200** as returned light which further increases the temperature.

Under use circumstance where there is returned light to the light source device, the returned light illuminates upon the sealing portion **211** of the discharge lamp **200,** causing the temperature of the portion to rise. Thus, there is a problem that extending the life of the conventional light source is very difficult when used under the condition where there is returned light.

An objective of the present invention is to provide a light source device, an illumination optical device and a display device with a long life and without reliability being impaired even under the condition where there is returned light to the light source device.

A light source device according to one aspect of the present invention includes: light emitting means which serves as a light source; reflecting means for reflecting light emitted from the light emitting means, and outputting the light to the outside; and light shielding means for shielding at least a part of light, which is reflected and returns toward the light emitting means, of the light emitted from the reflecting means to the outside.

In the light source device, at least a part of light, which is reflected and returns toward the light emitting means, of the light emitted from the reflecting means to the outside is shielded. Thus, even under use circumstance where there is returned light to the light source device, life of the light emitting means can be prevented from being shortened by the returned light, and a light source device with high reliability can be realized.

An illumination optical device according to another aspect of the present invention includes: the light source device described above; and light selecting means which is placed near a condensing position of light emitted from the light source device and selectively transmits light having a predetermined wavelength of the light emitted from the light source device.

In the illumination optical device, at least a part of light, which is reflected by the light selecting means and returns toward the light emitting means, of the light emitted from the reflecting means to the outside is shielded. Thus, even under use circumstance where there is returned light to the light source device, life of the light source device can be prevented from being shortened by the returned light, and a illumination optical device with high reliability can be realized.

A display device according to yet another aspect of the present invention includes: a light source device described above; forming means for forming an optical image corresponding to a video signal by using light emitted from the light source device; and projecting means for projecting the optical image formed by the forming means on a screen.

In the display device, at least a part of light, which is reflected and returns toward the light emitting means, of the light emitted from the reflecting means to the outside is shielded. Thus, even under use circumstance where there is returned light to the light source device, life of the light source device can be prevented from being shortened by the returned light, and a display device with high reliability can be realized.

### BRIEF DESCRIPTION OF THE DRAWINGS

Figure **1** is a partially sectional view showing a structure of a light source device according to Embodiment 1 of the present invention.
Figure **2** is a diagram of an optical path for illustrating a light shielding function in the light source device shown in Figure **1.**
Figure **3** is a partially sectional view showing a structure of a light source device according to Embodiment 2 of the present invention.
Figure **4** is a partially sectional view showing a structure of a light source device according to Embodiment 3 of the present invention.
Figure **5** is a partially sectional view showing a structure of a light source device according to Embodiment 4 of the present invention.
Figure **6** is a partially sectional view showing a structure of a light source device according to Embodiment 5 of the present invention.
Figure **7** is a partially sectional view showing a structure of a light source device according to Embodiment 6 of the present invention.
Figure **8** is a diagram of an optical path for illustrating a light shielding function in the light source device shown in Figure **7.**
Figure **9** is a partially sectional view showing a structure of an illumination optical device according to Embodiment 7 of the present invention.
Figure **10** is a schematic diagram of a color selection member shown in Figure **9.**
Figure **11** is a schematic diagram showing a structure of a display device according to Embodiment 8 of the present invention.
Figure **12** is a schematic diagram showing a structure of a display device according to Embodiment 9 of the present invention.
Figure **13** is a schematic diagram showing a structure of a display device according to Embodiment 10 of the present invention.
Figure **14** is a schematic diagram showing a structure of a display device according to Embodiment 11 of the present invention.
Figure **15** is a schematic diagram showing a structure of a conventional projection display device.
Figure **16** is a schematic diagram showing a structure of a color wheel shown in Figure **15.**
Figure **17** is a partially sectional view showing a structure of a light source device shown in Figure **15.**
Figure **18** is an enlarged cross-sectional view showing a portion cut along line A-A shown in Figure **17.**

### BEST MODE FOR CARRYING OUT THE INVENTION

Hereinafter, light sources according to embodiments of the present invention, and specific embodiments when they are applied to illumination optical devices or display devices will be described with reference to the drawings.

### (Embodiment 1)

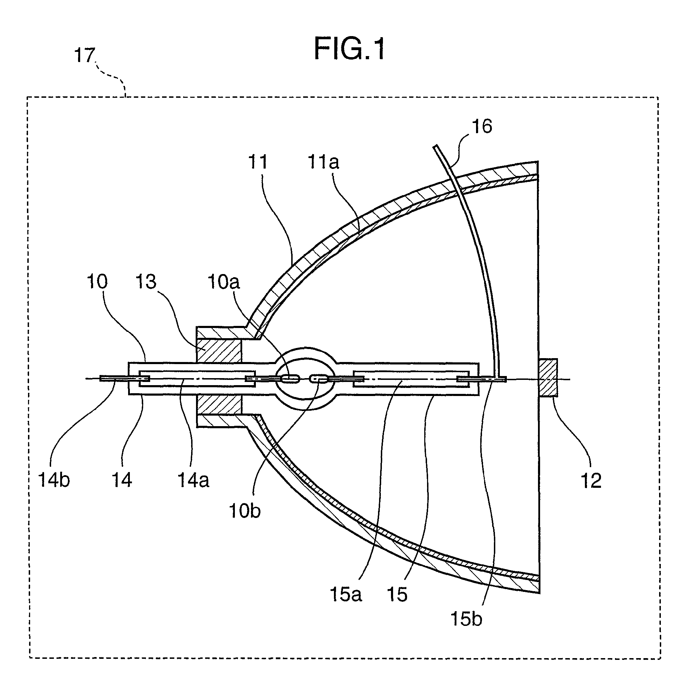

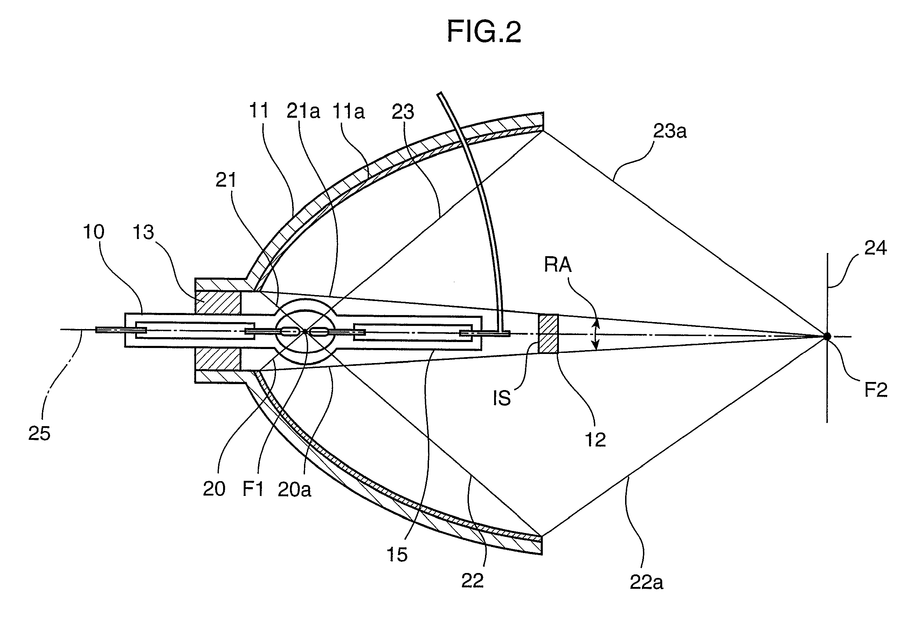

Figure **1** is a partially sectional view showing a structure of a light source device according to a structure of a light source according to Embodiment **1** of the present invention. Figure **2** is a diagram of an optical path for illustrating a shielding effect in the light source device shown in Figure **1.** A light source device **17** shown in Figure **1** includes a discharge lamp **10** which is exemplary light emitting means, an ellipsoidal mirror **11** which is exemplary reflecting means and condensing means, and a light shielding member **12** which is exemplary light shielding means.

The discharge lamp **10** may be an ultrahigh pressure mercury lamp, for example. The ultrahigh pressure mercury lamp has extremely high luminance and good in condensing. Thus, light can be condensed efficiently by the ellipsoidal mirror **11.** On both ends of the luminous tube of the discharge lamp **10,** sealing portions **14** and **15** are provided. Metal foils **14a** and **15a** and lead wires **14b** and **15b** are sealed inside.

The metal foils **14a** and **15a** are formed of a metal material such as molybdenum or the like. The lead wires **14b** and **15b** are formed of a metal material such as tungsten or the like. Each metal is a material with high melting point and is suitable for such applications. One end of an external lead wire **16** is connected to the lead wire **15b** and the other end is drawn out of the ellipsoidal mirror **11.** By applying a high pressure to the external lead wire **16** and the lead wire **14b,** a discharge occurs between electrodes **10a** and **10b,** and light is emitted. The light emitting means is not particularly limited to the above-mentioned ultrahigh pressure mercury lamp, but may be various light sources such as halogen lamp, metal halide lamp, xenon lamp and the like.

A first focal (short focus) length **F1** (see Figure **2**) of the ellipsoidal mirror **11** is 10 mm. A second focal (long focus) length **F2** (see Figure **2**) is 120 mm. On a reflection surface **11a** of the ellipsoidal mirror **11,** a dielectric multilayer film for reflecting visible light efficiently and transmitting infrared rays is formed, and a visible light component of the light emitted from the discharge lamp **10** is efficiently reflected.

In the discharge lamp **10,** a center of gravity of the light emitting portion formed between the electrodes **10a** and **10b** is placed at about the same position as the first focus **F1** (see Figure **2**) of the ellipsoidal mirror **11.** The discharge lamp **10** is fixed to the ellipsoidal mirror **11** by an adhesive material **13.** In this way, a condensing spot proportional to the size of the light emitting portion is formed near the second focus **F2** (see Figure **2**) of the ellipsoidal mirror **11.** The emitted light from the discharge lamp **10** can be efficiently condensed. The adhesive material **13** is preferably a material with a high heat resistance property. For example, inorganic heat resistant adhesives such as SUMICERAM^{(TR)} (available from Asahi Chemical Co., Ltd.) may be used. The light shielding member **12** is placed near an exit opening portion of the ellipsoidal mirror **11.**

A light shielding effect of the light shielding member **12** will be described in detail with reference to Figure **2.** First, the light emitted from the discharge lamp **10** is reflected by the reflection surface **11a** of the ellipsoidal mirror **11** in predetermined directions. More specifically, light beams **20** and **21** are respectively reflected off as light beams **20a** and **21a** directed to the second focus **F2** of the ellipsoidal mirror **11.** Similarly, light beams **22** and **23** are respectively reflected off as light beams **22a** and **23a.** The light beams reflected by the reflection surface **11a** of the ellipsoidal mirror **11** are distributed in an area between the light beam **20a** and the light beam **22a,** and an area between the light beam **21a** and the light beam **23a.** Therefore, when the light is condensed using the ellipsoidal mirror **11,** there is an area **RA** with no reflected light. The area **RA** has a substantially conical shape.

The light shielding member **12** has a disc shape, and is placed in the area **RA** with no reflected light. Thus, the light shielding member **12** does not shield reflected light directly from the ellipsoidal mirror **11** and can reflect a part of the reflected light which is reflected outside the light source device **17** and returns to the ellipsoidal mirror **11.**

For example, when a diffusive reflection surface **24** is placed near the second focus **F2** of the ellipsoidal mirror **11,** a part of the light incident on the reflection surface **24** is reflected in a direction toward the ellipsoidal mirror **11** (discharge lamp **10).** Of this reflected light, i.e., the light comes back to ellipsoidal mirror **11,** the light shielding member **12** shields light incident on the sealing portion **15** of the discharge lamp **10.** In this way, the temperature rise of the sealing portion **15** due to the returned light can be suppressed, and the reliability of the optical light source **17** can be improved.

The light shielding member **12** may be formed by forming a dielectric multilayer film for reflecting visible light on a surface of a transmissive plane glass. Light proceeds from the ellipsoidal mirror **11** toward the second focus **F2** is convergence light. Thus, in the area **RA** with no reflected light directly from the ellipsoidal mirror **11** becomes larger as it becomes closer to the ellipsoidal mirror **11.** Therefore, when the dielectric multilayer film is formed, an area of the light sealing portion becomes larger when it is formed on a surface IS close to the ellipsoidal mirror 11 and is more effective.

The light shielding member 12 also may be formed by forming a dielectric multilayer film which reflects infrared rays, a dielectric multilayer film which reflects ultraviolet rays, a dielectric multilayer film which reflects infrared rays and ultraviolet rays, or a dielectric multilayer film which reflects infrared rays, ultraviolet rays, and visible light, using glass which absorbs light of a particular wavelength, or using a medium which reflects light, such as aluminum foil, above-mentioned inorganic heat resistant adhesives (SUMICERAM^{(TR)}) or the like, depending upon the wavelength of the returned light. The light shielding member is not particularly limited to the above examples. Intended effects of the present invention can be achieved as long as the light shield member shields only the returned light without shielding the direct light from the ellipsoidal mirror 11.

The light shielding member 12 is preferably placed between an end of the exit opening portion of the ellipsoidal mirror 11 and an end of the sealing portion 15. However, it may be placed between the end of the exit opening portion of the ellipsoidal mirror 11 and the reflection surface 24. In such a case, it is preferable to be placed in an area closest to the ellipsoidal mirror 11 among three areas obtained by equally dividing the space into three. More preferably, it is placed in an area closest to the ellipsoidal mirror 11 among four areas obtained by equally dividing the space into four.

The size of the light shielding member 12 is preferably smaller than a size of a cross section of the area RA with no reflected light at the position where the light shielding member 12 is placed. In other words, a diameter of the light shielding member 12 is preferably smaller than a diameter of a circular cross section of the area RA. In such a case, a difference between the diameter of the light shielding member 12 and the diameter of the circular cross section of the area **RA** can be used as a margin for placing the light shielding member **12** to allow attachment and forming of the light shielding member **12** to be readily performed.

The diameter of the light shielding member **12** may be larger than the diameter of the circular cross section of the area **RA.** In this case as well, a difference between the diameter of the light shielding member **12** and the diameter of the circular cross section of the area **RA** can be used as a margin for placing the light shielding member **12.** If there is a sufficient amount of the light reflected by the ellipsoidal mirror **11,** a sufficient amount of light can be obtained even when the diameter of the light shielding member **12** is made larger than the diameter of the circular cross section of the area **RA.**

In the present embodiment, the light shielding member **12** is placed at a position where the center of the light shielding member **12** having a disc shape intersects an optical axis **25** of the ellipsoidal mirror **11.** However, the position of the light shielding member **12** is not limited to such an example, and the center may be placed at a position which is shifted from the optical axis **25,** depending upon distribution of the returned light. For example, if the reflection surface **24** is tilted from the optical axis **25** and the returned light impinges at a position shifted from the optical axis **25,** the center may be placed at a position eccentric from the optical axis **25.** The light shielding member **12** is placed at a position appropriately set depending upon the application.

As described above, in the present embodiment, the light shielding member **12** placed near the exit opening portion of the ellipsoidal mirror **11** shields the returned light even under the use circumstance where there is returned light to the ellipsoidal mirror **11.** Thus, the temperature rise of the sealing portion **15** can be suppressed, and the light source device **17** with high reliability and the long life may be provided.

In the above description a method for fixing the light shielding member **12** is not particularly mentioned. However, various methods may be used for fixing the light shielding member **12.** For example, a supporting member extending from a point of an edge of the exit opening portion of the ellipsoidal mirror **11** to the optical axis **25** may be provided and the light shielding member **12** may be fixed to the supporting member. In such a case, for avoiding the light shielding member **12** to shield the reflected light from the ellipsoidal mirror **11** unnecessarily, the supporting member is preferably placed so as to overlap with the external lead wire **16.** When a supporting member extending from a point of an edge of the exit opening portion of the ellipsoidal mirror **11** to a point of the edge on the other side through the optical axis **25** is used, it is preferable that at least half the supporting member overlaps with the external lead wire **16**.

### (Embodiment 2)

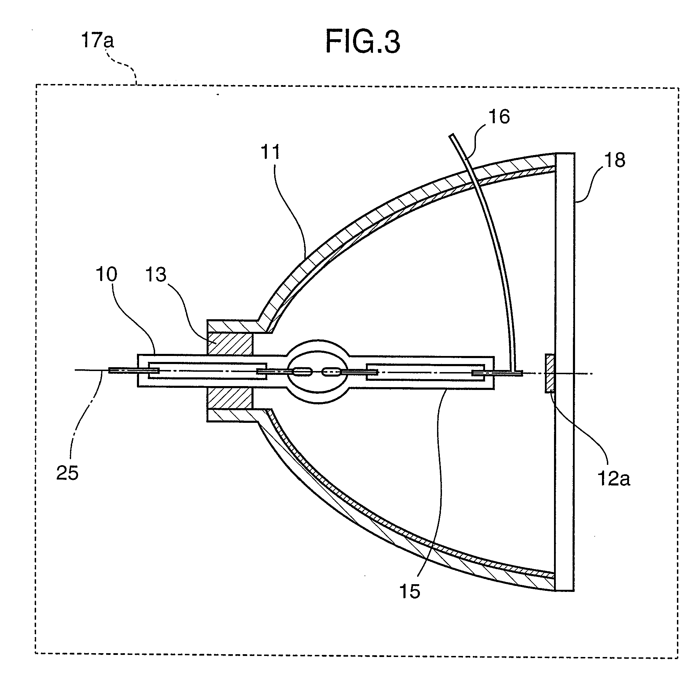

Figure **3** is a schematic diagram showing a structure of a light source device according to Embodiment 2 of the present invention. A light source device **17a** shown in Figure **3** includes the discharge lamp **10**, the ellipsoidal mirror **11,** a light shielding member **12a** which is exemplary light shielding means, and a transmissive sealing member **18** which is exemplary transmissive sealing means. Components same as those in Embodiment 1 are denoted by same reference numerals, and will not be further described.

The light source device **17a** shown in Figure **3** is different from the light source device **17** shown in Figure **1** in that the transmissive sealing member **18** is placed at the exit opening portion of the ellipsoidal mirror **11,** and a substantially sealed space is formed inside the ellipsoidal mirror **11.** In this way, even in the case where the discharge lamp **10** is broken, glass pieces can be prevented from scattering to the outside of the light source device **17a.** However, in the light source device **17a** having such a structure, temperatures of the portions of the discharge lamp **10** easily rise since the sealed space is formed inside the ellipsoidal mirror **11.**

For addressing this problem, in the present embodiment, as shown in Figure **3,** the light shielding member **12a** is formed at a center of the transmissive sealing member **18.** The light shielding member **12a** is placed in a portion of the area with no reflected light. As in Embodiment 1, of the returned light re-enters the ellipsoidal mirror **11,** the light shielding member **12a** shields light incident on the sealing portion **15** of the discharge lamp **10** to suppress temperature rise of the portion. In this way, the reliability of the light source device **17a** can be improved.

The light shielding member **12a** has a disc shape, and is formed of a dielectric film which reflects visible light which is formed on a surface of the transmissive sealing member **18** on the ellipsoidal mirror **11** (discharge lamp **10**) side. Light proceeds from the ellipsoidal mirror **11** toward the second focus **F2** (not shown) is convergence light. Thus, the area with no reflected light directly from the ellipsoidal mirror **11** becomes larger as it is closer to the ellipsoidal mirror **11.** Therefore, when the dielectric multilayer film is formed, an area of the light sealing portion can become larger when it is formed on a surface close to the ellipsoidal mirror **11,** and is more effective. However, the light shielding member **12a** may be placed on a surface of the transmissive sealing member **18** on the side different from that shown in Figure **3,** i.e., a surface opposite to the discharge lamp **10.** Such a light shielding member may also be formed using the above-mentioned dielectric multilayer film, and, essentially, desired effects can be achieved.

The light shielding member **12a** also may be formed by forming a dielectric multilayer film which reflects at least one of ultraviolet rays and infrared rays, using glass which absorbs light of a particular wavelength, or using a medium which reflects light, such as aluminum foil, above-mentioned inorganic heat resistant adhesives (SUMICERAM^{(TR)}) or the like, depending upon the wavelength of the returned light. The light shielding member **12a** is not particularly limited to the above examples. Intended effects of the present invention can be achieved as long as the light shield member shields only the returned light without shielding the direct light from the ellipsoidal mirror **11.**

In the present embodiment, the light shielding member **12a** is placed at a position where the center of the light shielding member **12a** having a disc shape intersects an optical axis **25** of the ellipsoidal mirror **11.** However, the position of the light shielding member **12a** is not limited to such an example, and the center may be placed at a position which is shifted from the optical axis **25,** depending upon distribution of the returned light. The light shielding member **12a** is placed at a position appropriately set depending upon the application. The transmissive sealing member is not particularly limited to plane parallel glass. Lenses having a certain power or the like may be used to form the light shielding member **12a** on the lenses or the like. Alternatively, the light shielding member may be attached to a hole formed at a center of the parallel flat glass, or the transmissive sealing member and the light shielding member may be integrally formed such that the light shielding member is placed in a center of the transmissive sealing member.

As described above, in the present embodiment, the light shielding member **12a** placed on the inside surface of the transmissive sealing member **18** at the exit opening portion of the ellipsoidal mirror **11** shields the returned light even under the use circumstance where there is returned light to the ellipsoidal mirror **11.** Thus, the temperature rise of the sealing portion **15** can be suppressed, and the light source device **17a** with high reliability and the long life may be provided.

In the present embodiment, the substantially sealed space is formed inside the ellipsoidal mirror **11.** However, it does not have to be the sealed space unless it is required particularly, and a vent hole or the like may be provided.

### (Embodiment 3)

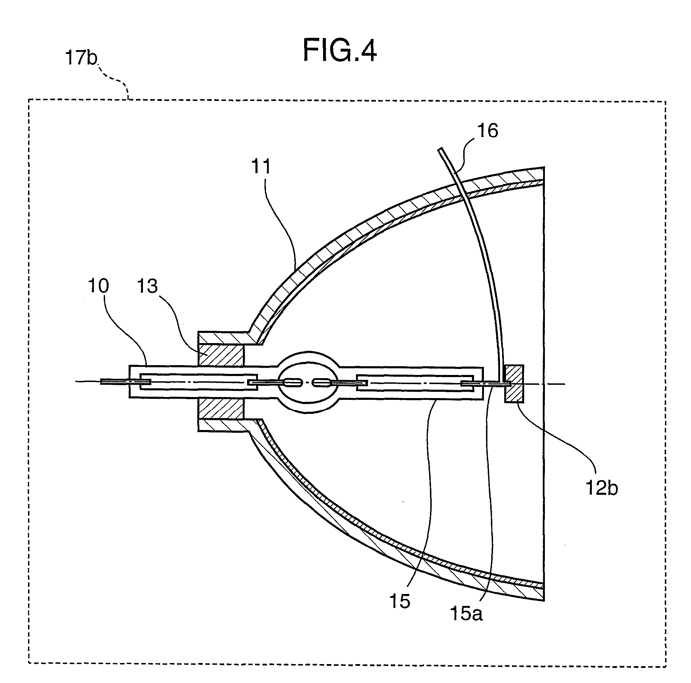

Figure **4** is a schematic diagram showing a structure of a light source device according to Embodiment 3 of the present invention. A light source device **17b** shown in Figure **4** includes the discharge lamp **10**, the ellipsoidal mirror **11,** and a light shielding member **12b** which is exemplary light shielding means. Components same as those in Embodiment 1 are denoted by same reference numerals, and will not be further described.

The light source device **17b** shown in Figure **4** is different from the light source device **17** shown in Figure **1** in that the light shielding member **12b** is fixed to the lead wire **15b** and the external lead wire **16.** The light shielding member **12b** has a disc shape, and is formed by forming a dielectric multilayer film which reflects visible light on a substrate formed of transmissive plane glass, heat resistant plastic, ceramics or the like. The light shielding member **12b** is fixed to the lead wire **15b** and the external lead wire **16** using a highly heat-resistant adhesive or the like. The light shielding member **12b** is placed in a portion of the area with no reflected light. As in Embodiment 1, of the returned light re-entering the ellipsoidal mirror **11,** the light shielding member **12b** shields light incident on the sealing portion **15** of the discharge lamp **10** to suppress temperature rise of the portion.

In this way, even in a light source device which does not include the transmissive sealing member **18** shown in Figure 3, the light shielding member **12b** can be stably fixed. Further, the light shielding member **12b** can be placed at a position closer to the sealing portion **15** of the discharge lamp **10.** Thus, a light shielding portion of the light shielding member **12b** can be broadened, and heat-insulating effect can be further improved.

As described above, in the present embodiment, the light shielding member **12b** fixed to the lead wire **15b** and the external lead wire **16** shields the returned light even under the use circumstance where there is returned light to the ellipsoidal mirror **11.** Thus, the temperature rise of the sealing portion **15** can be suppressed, and the light source device **17b** with high reliability and the long life may be provided.

In the present embodiment, the transmissive sealing member **18** shown in Figure **3** is not shown. However, the transmissive sealing member **18** may be attached as in Embodiment 2 to form a sealed space. The light shielding member **12b** is not particularly limited to the above example, and the member similar to that in Embodiment 1 may be used. The attachment position of the light shielding member **12b** is also not limited to the above example, and the light shielding member **12b** may be fixed to one end of the sealing portion 15, or one of the lead wire **15b** and the external lead wire **16.**

### (Embodiment 4)

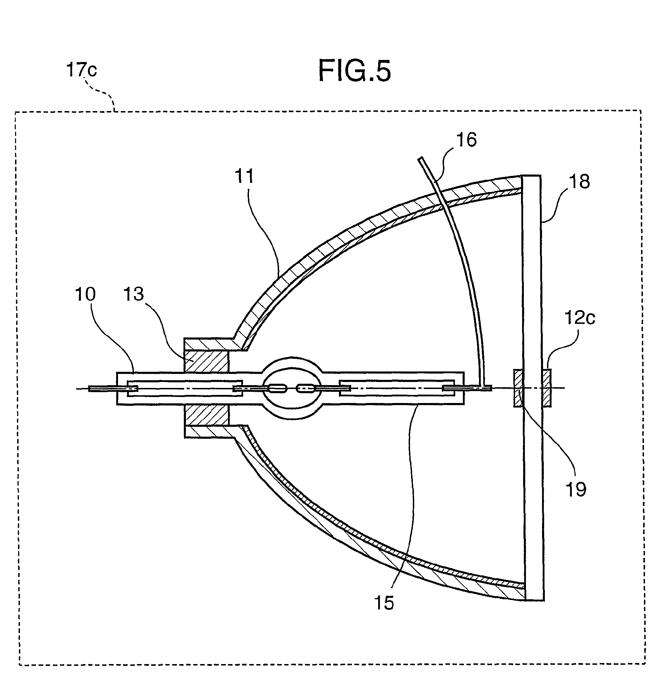

Figure 5 is a schematic diagram showing a structure of a light source device according to Embodiment **4** of the present invention. A light source device **17c** shown in Figure **5** includes the discharge lamp 10, the ellipsoidal mirror **11,** a light shielding member **12c** which is exemplary light shielding means, the transmissive sealing member **18,** and an absorption member **19** which is exemplary absorbing means. Components same as those in Embodiment 2 are denoted by same reference numerals, and will not be further described.

The light source device **17c** shown in Figure 5 is different from the light source device **17a** shown in Figure **3** in that the light shielding member **12c** is formed on a surface of the transmissive sealing member **18** (a surface opposite to the discharge lamp 10), and the absorption member **19** is formed on a back surface of the transmissive sealing member **18** (a surface on the discharge lamp **10** side). Similarly to the light shielding member **12a** of Embodiment 2, the light shielding member **12c** has a disc shape and is formed of a dielectric multilayer film which reflects visible light which is formed on a surface of the transmissive sealing member **18.**

The light shielding member **12c** is placed in a portion of the area with no reflected light. As in Embodiment 2, of the returned light re-entering the ellipsoidal mirror **11,** the light shielding member **12c** shields light incident on the sealing portion **15** of the discharge lamp **10** to suppress temperature rise of the portion. In this case, the light shielding member **12c** becomes farther from the ellipsoidal mirror **11** by a thickness of the transmissive sealing member **18.** However, since the thickness of the transmissive sealing member **18** is thin, light shielding effect similar to that in Embodiment 2 can be achieved.

The absorption member **19** is formed by forming a black film which absorbs visible light on the back surface of the transmissive sealing member **18.** The absorption member **19** is placed in a portion of the area with no reflected light, and absorbs unnecessary light passing through the portion. The unnecessary light passes through the transmissive sealing member **18** and is reflected by an external reflecting member when there is no absorption member **19.** The light shielding member **12c** cannot reflect this reflected light, and the temperature of the sealing portion **15** is raised. In the present embodiment, since the unnecessary light is absorbed by the absorption member **19,** the temperature rise of the sealing portion **15** due to reflected light from the unnecessary light can be suppressed.

When a part of the light shielding member **12c** is positioned outside the area with no reflected light, the light reflected by the ellipsoidal mirror **11** is reflected by the back surface of the light shielding member **12c** (a portion outside the area with no reflected light) and illuminates the sealing portion **15** of the discharge lamp **10.** In such a case, by placing the absorption member **19** at a position so as to cover the back surface of the light shielding member **12c,** the light reflected by the ellipsoidal mirror **11** is not reflected by the back surface of the absorption member **19** but is absorbed by the absorption member **19.** Thus, the temperature rise of the sealing portion **15** can be suppressed.

As described above, in the present embodiment, the light shielding member **12c** placed on an external surface of the transmissive sealing member **18** at the exit opening portion of the ellipsoidal mirror **11** shields the returned light, and the absorption member **19** placed on an inner surface of the transmissive sealing member **18** absorbs the unnecessary light or the like even under the use circumstance where there is returned light to the ellipsoidal mirror **11.** Thus, the temperature rise of the sealing portion **15** can be suppressed, and the light source device **17c** with high reliability and the long life may be provided.

The absorption member **19** is not limited to the above example. Various types of the absorption member may be used as long as it can absorb unnecessary light or the like. The position is also not particularly limited to the above example. It may be integrally formed with the light shielding member **12c** on the back surface of the light shielding member **12c** (a surface on the transmissive sealing member **18** side).

### (Embodiment 5)

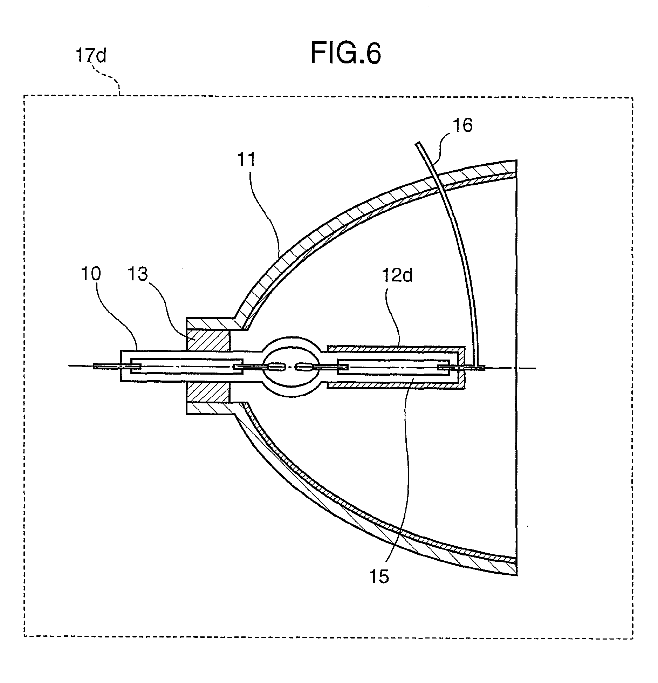

Figure **6** is a schematic diagram showing a structure of a light source device according to Embodiment 5 of the present invention. A light source device **17d** shown in Figure **6** includes the discharge lamp **10,** the ellipsoidal mirror **11,** and a light shielding member **12d** which is exemplary light shielding means. Components same as those in Embodiment 1 are denoted by same reference numerals, and will not be further described.

The light source device **17d** shown in Figure **6** is different from the light source device **17** shown in Figure **1** in that the light shielding member **12d** which covers the sealing portion **15** is employed instead of the light shielding member **12.** The light shielding member **12d** is formed by forming a dielectric multilayer film on an external surface of a tube with a bottom which is formed of heat-resistant plastic, ceramics, or the like. The light shielding member **12d** is adhered to the sealing portion **15** using a highly heat-resistant adhesive or the like. The light shielding member **12d** is placed in a portion of the area with no reflected light. As in Embodiment 1, of the returned light which illuminates the ellipsoidal mirror **11,** the light shielding member **12d** shields the light incident on the sealing portion **15** of the discharge lamp **10** almost completely and suppresses temperature rise of the portion.

In this example, even in the light source does not include the transmissive sealing member **18** shown in Figure **3,** the light shielding member **12d** can be stably fixed. Since the light shielding member **12d** covers almost the entire surface of the sealing portion **15,** the light incident on the sealing portion **15** can be almost completely shielded. Thus, the heat-insulating effect can be further improved.

As described above, in the present embodiment, the light shielding member **12d** which covers the sealing portion **15** shields the returned light almost completely even under the use circumstance where there is returned light to the ellipsoidal mirror **11.** Thus, the temperature rise of the sealing portion **15** can be suppressed, and the light source device **17d** with high reliability and the long life may be provided.

The light shielding member is not particularly limited to the above example. The light shielding member may be formed directly on the sealing portion **15,** or may be may be formed to cover a part of the sealing portion **15,** for example a part of an end of the sealing portion **15.**

### (Embodiment 6)

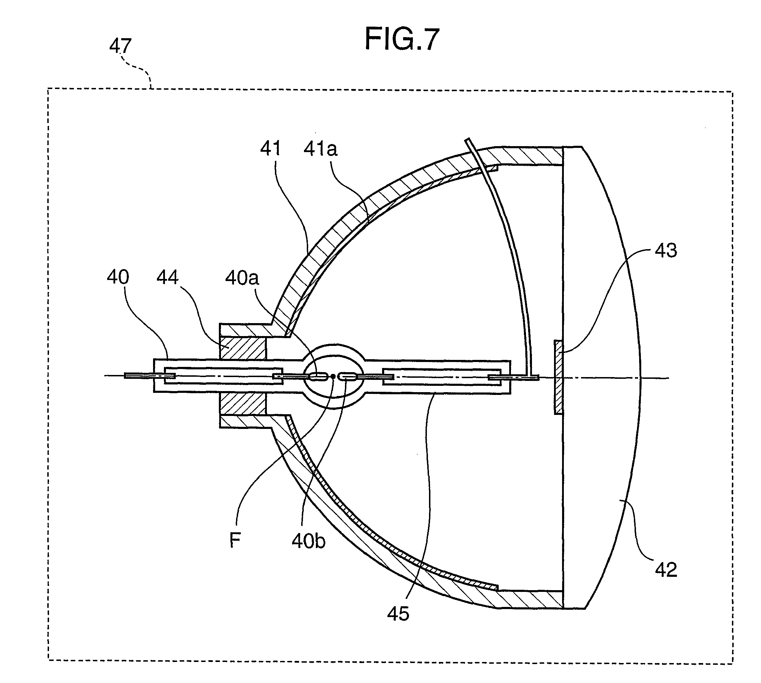

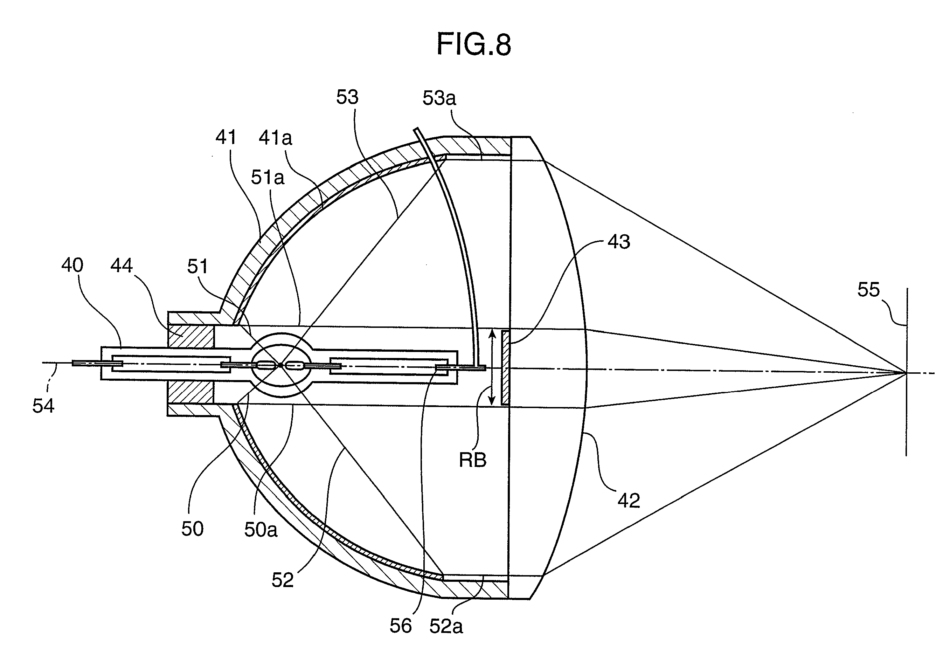

Figure **7** is a partially sectional view showing a structure of a light source device according to Embodiment 6 of the present invention. Figure **8** is a diagram of an optical path for illustrating a shielding effect in the light source device shown in Figure **7.** A light source device **47** shown in Figure **7** includes a discharge lamp **40** which is exemplary light emitting means, a parabolic mirror **41** which is exemplary first condensing means, a plano-convex lens **42** which is exemplary second condensing means, and a light shielding member **43** which is exemplary shielding means.

A focal length F of the parabolic mirror **41** is 10 mm. On a reflection surface **41a** of the parabolic mirror **41,** a dielectric multilayer film for reflecting visible light efficiently and transmitting infrared rays is formed, and a visible light component of the light emitted from the discharge lamp **40** is efficiently reflected.

In the discharge lamp **40,** which has a similar structure as the discharge lamp **10** shown in Figure **1,** a center of gravity of the light emitting portion formed between the electrodes **40a** and **40b** is placed at about the same position as the focus **F** of the parabolic mirror **41.** The discharge lamp **40** is fixed to the parabolic mirror **41** by an adhesive material **44.** In this way, light reflected by the reflection surface **41a** becomes light proceeding in parallel with an optical axis **54,** and exits from the parabolic mirror **41.** The adhesive material **44** is preferably a material with a high heat resistance property. For example, inorganic heat resistant adhesives such as SUMICERAM^{(TR)} (available from Asahi Chemical Co., Ltd.) may be used.

The plano-convex lens **42** is placed at the exit opening portion of the parabolic mirror **41** and forms a substantially sealed space inside the parabolic mirror **41.** In the present embodiment, the plano-convex lens **42** is employed as second condensing means. However, it is not limited to such an example, and various modifications can be made as long as it has a condensing function for the emitted light from the parabolic mirror **41.** For example, biconvex lens, or a combination of a plurality of lenses may be used, or the surface which is closer to the parabolic mirror **41** may be shaped into a convex surface. In the present embodiment, the substantially sealed space is formed inside the parabolic mirror **41.** However, it does not have to be the sealed space unless it is required particularly, and a vent hole or the like may be provided.

A light shielding effect of the light shielding member **43** will be described in detail with reference to Figure **8.** First, the light emitted from the discharge lamp **40** is reflected by the reflection surface **41a** of the parabolic mirror **41** in predetermined directions. More specifically, light beams **50** and **51** are respectively reflected off as light beams **50a** and **51a** which proceed in a substantially parallel manner with the optical axis **54.** Similarly, light beams **52** and **53** are respectively reflected off as light beams **52a** and **53a** which proceed in a substantially parallel manner with the optical axis **54.** The light reflected by the reflection surface **41a** of the parabolic mirror **41** are distributed in an area between the light beam **50a** and the light beam **52a,** and an area between the light beam **51a** and the light beam **53a.** Therefore, when the light is condensed using the parabolic mirror **41,** there is an area **RB** with no reflected light. The area **RB** has a combined shape of a substantially tubular shape and a substantially conical shape.

The light shielding member **43** has a disc shape, and is placed in the area **RB** with no reflected light. Thus, the light shielding member **43** does not shield direct reflected light from the parabolic mirror **41** and can reflect a part of the reflected light which is reflected outside the light source device **47** and returns to the parabolic mirror **41.**

For example, as shown in Figure **8,** when a diffusive reflection surface **55** is placed near the focus of the plano-convex lens **42,** a part of the light incident on the reflection surface **55** is reflected in a direction toward the parabolic mirror **41.** Of this reflected light, i.e., the light comes back to the parabolic mirror **41,** the light shielding member **43** shields light incident on the sealing portion **45** of the discharge lamp **40.** In this way, the temperature rise of the sealing portion **45** due to the returned light can be suppressed, and the reliability of the optical light source **47** can be improved.

The light shielding member **43** may be formed by forming a dielectric multilayer film for reflecting visible light on a surface of a transmissive plane glass. The light shielding member **43** also may be formed by forming a dielectric multilayer film which reflects ultraviolet rays, using glass which absorbs light of a particular wavelength, or using a medium which reflects light, such as aluminum foil, above-mentioned inorganic heat resistant adhesives (SUMICERAM^{(TR)}) or the like. The light shielding member **43** is not particularly limited to the above examples. Intended effects of the present invention can be achieved as long as the light shield member shields only the returned light without shielding the direct light from the parabolic mirror **41.**

The light shielding member **43** is preferably placed between an end of the exit opening portion of the parabolic mirror **41** and the an end of the sealing portion **15.** However, it may be placed between the end of the exit opening portion of the parabolic mirror **41** and the reflection surface **55.** In such a case, it is preferable to be placed in an area closest to the parabolic mirror **41** among three areas obtained by equally dividing the space into three. More preferably, it is placed in an area closest to the parabolic mirror **41** among four areas obtained by equally dividing the space into four.

The size of the light shielding member **43** is preferably smaller than a size of a cross section of the area **RB** with no reflected light at the position where the light shielding member **12** is placed. In other words, a diameter of the light shielding member **43** is preferably smaller than a diameter of a circular cross section of the area **RB.** In such a case, a difference between the diameter of the light shielding member **43** and the diameter of the circular cross section of the area **RB** can be used as a margin for placing the light shielding member **43** to allow attachment and forming of the light shielding member **43** to be readily performed. The diameter of the light shielding member **43** may be larger than the diameter of the circular cross section of the area **RB** when there is a sufficient amount of light reflected by the parabolic mirror **41.** In this case, a difference between the diameter of the light shielding member **43** and the diameter of the circular cross section of the area **RB** can be used as a margin for placing the light shielding member **43.**

In the present embodiment, the light shielding member **43** having a disc shape is placed at a position where the center of the light shielding member **43** intersects the optical axis **54** of the parabolic mirror **41.** However, the position of the light shielding member **43** is not limited to such an example, and the center may be placed at a position which is shifted from the optical axis **54,** depending upon distribution of the returned light. For example, if the reflection surface **55** is tilted from the optical axis **54** and the returned light is shifted from the optical axis **54,** the center may be placed at a position eccentric from the optical axis **54** in accordance with the shift. The light shielding member **43** is placed at a position appropriately set depending upon the application.

As described above, in the present embodiment, the light shielding member **43** provided on the plano-convex lens **42** which is placed near the exit opening portion of the parabolic mirror **41** shields the returned light even under the use circumstance where there is returned light to the parabolic mirror **41.** Thus, the temperature rise of the sealing portion **45** can be suppressed, and the light source device **47** with high reliability and the long life may be provided.

In the embodiments described above, the ellipsoidal mirror and the parabolic mirror are respectively used as the condensing means and the first condensing means. However, the present invention is not particularly limited to such examples. A parabolic mirror may be used as the condensing means, or an ellipsoidal mirror may be used as the first condensing means. Alternatively, various types of mirrors such as reflective mirrors having non-spherical shape other than the ellipsoidal mirror and the parabolic mirror can be used as long as they can reflect the light emitted from a discharge lamp into predetermined directions and condense the light.

### (Embodiment 7)

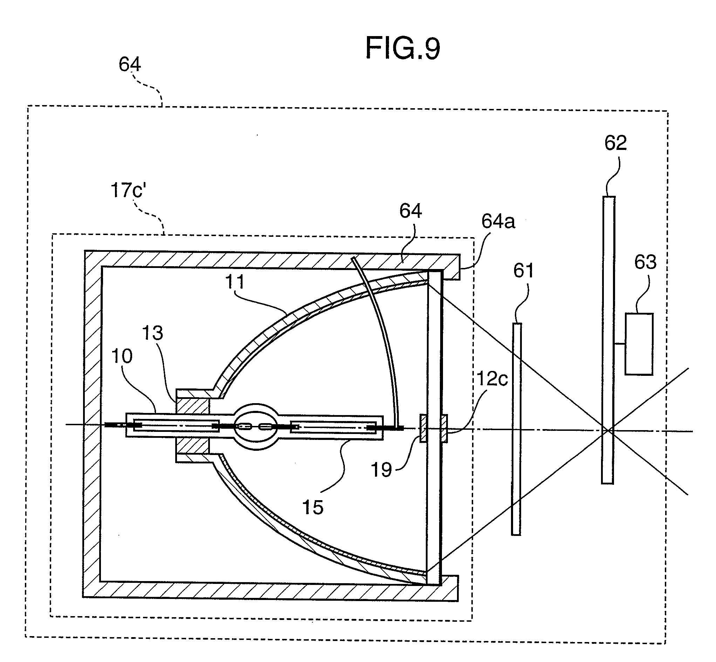

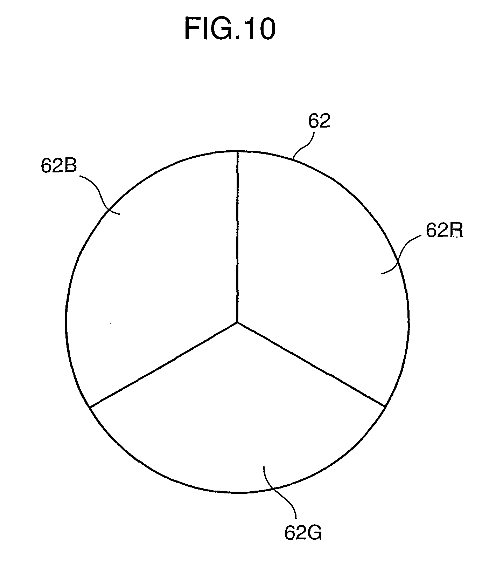

Figure **9** is a partially sectional view showing a structure of an illumination optical device according to Embodiment 7 of the present invention. Figure **10** is a schematic diagram showing a structure of a color selection member shown in Figure **9.** An illumination optical device **64** shown in Figure **9** includes a light source device **17c',** a UV-IR cut filter **61,** a color selection member **62** which is exemplary color selecting means, and a motor **63.** The light source device **17c'** is a light source device **17c** shown in Figure **5,** which further includes a housing **64,** and other components are same as the light source device **17c.** Thus, the same components are denoted by the same reference numerals and will not be described further. The light source device used in the illumination optical device **64** is not limited to this example, and any of the light source devices of the above embodiments may be used.

From light emitted from the light source device **17c',** ultraviolet rays and infrared rays are removed by the UV-IR cut filter **61.** The color selection member **62** is placed near a position where the emitted light from the light source device **17c'** is condensed. The color selection member **62** is formed by combining a red color filter **62R,** a green color filter **62G,** and a blue color filter **62** which can selectively transmit light of red, green and blue bands as shown in Figure **9.** By rotating the motor **63** provided on a rotational axis of the color selection member **62,** light of the red, green and blue bands can be switched timewise, and can be passed sequentially. The color selection member **62** is not limited to the above example, but various types of the color selection member such as single color filters for transmitting a certain band of wavelength, dimmer filters and the like may be used. Various types of the members can be used as the color selecting means of the present invention depending upon the properties, the shape, and a form of use.

Of the light which illuminates the color selection member **62,** the light other than the transmissive band of the color filters **62R, 62G,** and **62B** is again reflected in directions toward the light source device **17c'.** If the reflected light impinges upon the light source device **17c',** the returned light causes the temperature of the sealing portion **15** of the discharge lamp **10** to rise as described above. This may be the reason that the reliability of the light source device **17c'** is deteriorated.

Therefore, in the present invention, the light source device **17c'** includes the light shielding member **12c.** The light shielding member **12c** does not shield an effective light emitted from the light source device **17c',** and efficiently shields light incident on the sealing portion **15** of the discharge lamp from the reflected light which re-enters. Thus, the temperature rise at the sealing portion **15** can be suppressed. As a result, the reliability of the light source device **17c'** is increased, and the illumination optical device **64** with high reliability can be achieved.

The ultraviolet rays and the infrared light reflected by the UV-IR cut filter **61** also becomes the returned light and re-enters the light source device **60.** They may cause the reliability of the light source device **17c'** to be deteriorated. Thus, the light shielding member **12c** may be formed using a material which reflects not only visible light but also ultraviolet rays and infrared rays.

In the present embodiment, the light source device **17c** shown in Figure **5** is attached to the housing **64,** and the housing **64** is formed such that it is detachable to the illumination optical device **64.** The housing **64** is formed of plastics and the like, and has a substantially rectangular parallelepiped shape. Tip portions **64a** of the housing **64** are protruded from a front face of the light source device **17c',** i.e., a surface of the light shielding member **12c** by a predetermined length. The light shielding member **12c** is placed at a position inward from the surface of the tip portions **64a** by a predetermined distance. This allows a user to grasp the housing **64** for attaching or removing the light source device **17c'** while the light shielding member **12c** is prevented from being damaged due to direct contact by the user to the light shielding member **12c.** The light shielding member **12c** can be securely protected.

### (Embodiment 8)

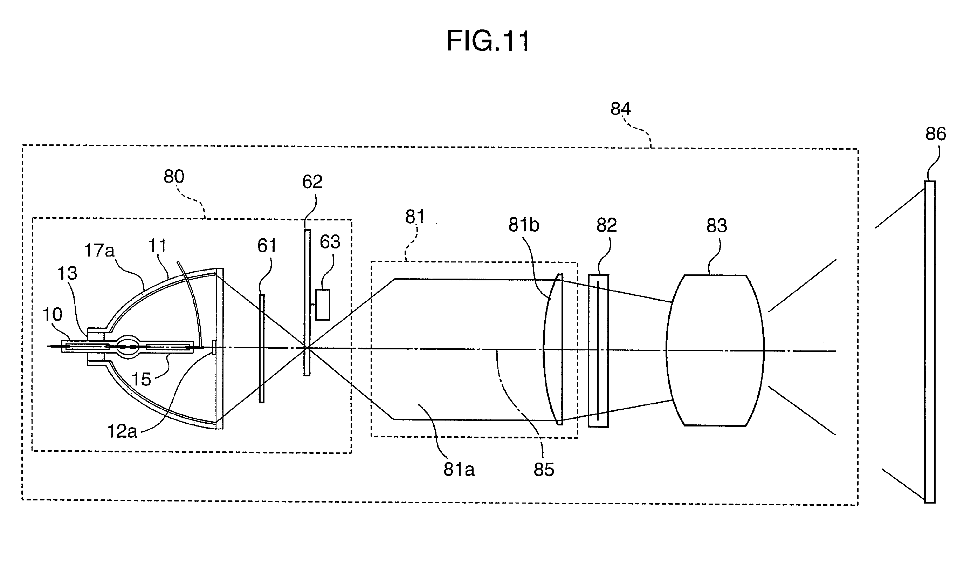

Figure **11** is a schematic diagram showing a structure of a display device according to Embodiment 8 of the present invention. A display device **84** shown in Figure **11** is a projection display device, which includes an illumination optical device **80,** a condensing optical system **81,** a transmissive liquid crystal panel **82** which is exemplary forming means, and a projection lens **83** which is exemplary projecting means.

The illumination optical device **80** is an illumination optical device **64** shown in Figure **9** with the light source device being replaced with the light source device **17a** shown in Figure **3.** The same components are denoted by the same reference numerals, and thus they will not be described further. The transmissive light of red, green, and blue emitted from the illumination optical device **80** impinges upon a condensing optical system **81.** The condensing optical system **81** is formed of a condenser lens **81a** and a field lens **81b.** The condenser lens **81a** converts divergence light emitted from the illumination optical device **80** into light which proceeds in a substantially parallel manner with an optical axis **85.** The field lens **81b** is used for effectively condensing the light passes through the liquid crystal panel 82 to the projection lens **83.**

The emitted light of the illumination optical device **80** is condensed by the condensing optical system **81** and illuminates the liquid crystal panel **82.** By synchronizing the illumination light of red, green and blue which is switched timewise and display of images on the liquid crystal panel **82,** optical images which correspond to the red, green, and blue video signals are formed on the liquid crystal panel **82** being switched sequentially from one to another. The projection lens **83** expands the optical image on the liquid crystal panel **82** and projects on a screen **86.** A large screen image displayed in full color is obtained.

According to the above structure, color images with a resolution as high as that in the three-plate type device can be achieved using one liquid crystal panel **82.** Since it is no longer necessary to provide small color filters on the pixels on the liquid crystal panel **82,** yield of the liquid crystal panel **82** will increase, and the cost of the projection display device can be reduced.

In the present embodiment, the light source device **17a** of the illumination optical device **80** includes the light shielding member **12a.** Thus, the light shielding member **12a** does not shield an effective light emitted from the light source device **17c' ,** and can efficiently shields the light incident on the sealing portion **15** of the discharge lamp **10** of the reflected light which is re-entering. As a result, the temperature rise of the sealing portion **15** can be suppressed, and the reliability of the illumination optical device **80** using the light source device **17a** can be improved. The small display device **84** with a high reliability can be realized.

In the above description, a transmissive liquid crystal panel is used as a spatial light modulating element. However, the present invention is not limited to such an example, and various types of the device such as a reflective liquid crystal panel, digital micromirror device (DMD) and the like may be used as long as they can spatially modulate illumination light to form an optical image. The display device to which the present invention is applied is not limited to the above example. For example, as will be described below, the display device may be applied as various types of display devices such as a rear projection display device and the like which has the projection display device accommodated inside the cabinet, and a display image can be watched through the transmissive screen attached to the cabinet.

### (Embodiment 9)

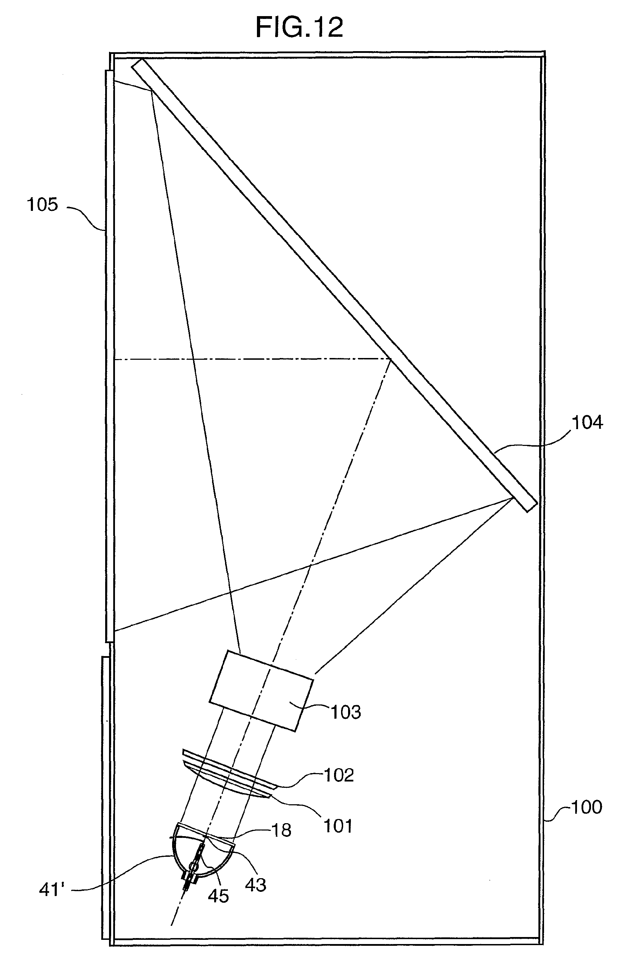

Figure **12** is a schematic diagram showing a structure of a display device according to Embodiment **9** of the present invention. The display device shown in Figure **12** is a rear projection display device which includes a light source device **41',** a field lens **101,** a transmissive liquid crystal panel **102** which is exemplary forming means, a projection lens **103** which is exemplary projecting means, a reflecting mirror **104,** and a screen **105.**

The light source device **41'** is a light source device **41** shown in Figure **8** with the plano-convex lens **42** on which the light shielding member **43** is formed is replaced with the transmissive sealing member **18** on which the light shielding member **43** is formed. Other components are same as those in the light source device **41** shown in Figure **8.** The same effects as the light shielding member **43** shown in Figure **8** are achieved.

Light rays emitted from the light source device **41'** passes the field lens **101,** and impinge upon the entire surface of the liquid crystal panel **102.** The light rays are modulated, and the video information is added. The output light rays modulated at the liquid crystal panel **102** proceeds to the projection lens **103** where an optical image is expanded. The output light rays from the projection lens **103** are bent into a certain angle by the reflecting mirror **104** attached to a housing **100,** and projected on the screen **105.** The number of the light source devices **41'** is not particularly limited to the above example. Two or more light source devices may be used. Not only a single plate optical structure, but also other types of optical structures, such as three-plate optical structures and the like may be used.

In the present embodiment having the above-described structure, the light source device **41'** includes the light shielding member **43.** Thus, the light shielding member **43** does not shield the effective light emitted from the light source device **41',** and efficiently shields light incident on the sealing portion **45** of the discharge lamp of the re-entering light reflected by the field lens **101.** As a result, temperature rise of the sealing portion **45** can be suppressed and the reliability of the light source device **41'** can be improved. Thus, a rear projection display device with high reliability can be realized.

### (Embodiment 10)

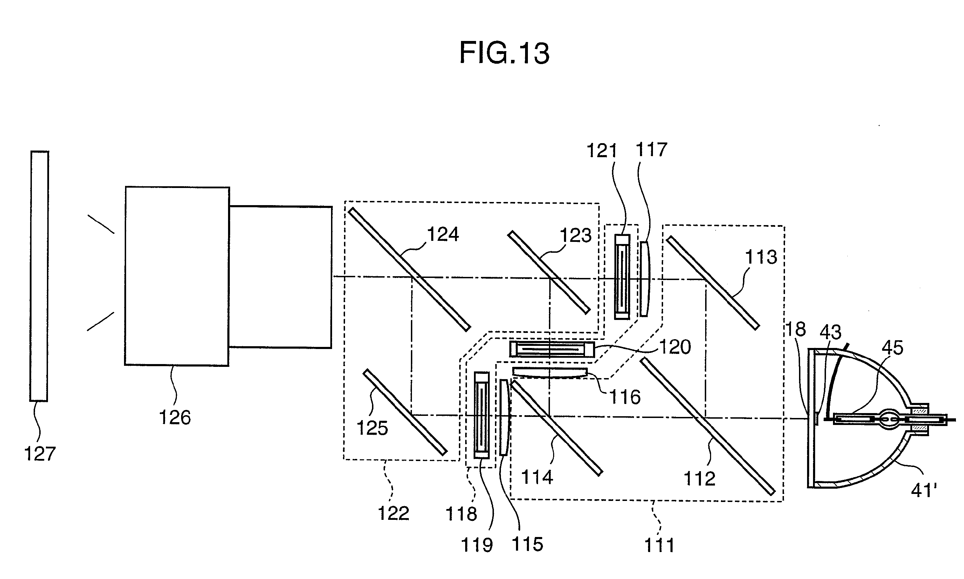

Figure **13** is a schematic diagram showing a structure of a display device according to Embodiment 10 of the present invention. The display device shown in Figure **13** is a three-plate projection display device of a mirror sequential method, which includes the light source device **41',** a color separation optical system **111,** condenser lenses **115** through **117,** a light valve portion **118** which is exemplary forming means, a color composition optical system **122,** a projection optical system **126** which is exemplary projecting means. The color composition method in the display device is not particularly limited to a mirror sequential method, and other methods such as a cross prism method and the like may be used.

The color separation optical system **111** is formed of a blue reflection dichroic mirror **112,** a reflecting mirror **113,** and a green reflection dichroic mirror **114.** The light valve portion **118** is formed of a red light valve unit **119,** a green light valve unit **120,** and a blue light valve unit **121.** The color composition optical system **122** is formed of a green reflection dichroic mirror **123,** a red reflection dichroic mirror **124,** and a total reflection mirror **125.**

The light source device **41'** is same as the light source device **41'** shown in Figure **12,** and has similar effects as the light shielding member **43** shown in Figure **8.** Light from the light source device **41'** impinges upon the color separation optical system **111.** Of the incident light, blue light is reflected by the blue reflection dichroic mirror **112** and then off the reflecting mirror **113,** and reaches the blue light valve unit **121** through the condenser lens **117.**

Green light and red light passed through the color composition optical system **122** impinge upon the green reflection dichroic mirror **114.** The green light is reflected by the green reflection dichroic mirror **114,** and reaches the green light valve unit **120** through the condenser lens **116.** The red light passes through the green reflection dichroic mirror **114,** and reaches the red light valve unit **119** through the condenser lens **115.**

The blue light valve unit **121,** the green light valve unit **120** and the red light valve unit **119** are respectively formed of a polarizing plate on light entering side, a liquid crystal panel and a polarizing plate on light outgoing side. The polarizing plate on light entering side transmits light of a polarization direction in a lateral direction of an external shape, and is set to absorb light of a polarization direction orthogonal to such a light. The light passed through the polarizing plate on light entering side impinges upon the liquid crystal panel. The liquid crystal panel changes the polarization direction of the transmitted light for each of the openings of a number of pixels based on an external signal. When a pixel is not driven, the polarization direction is rotated by 90 degrees. When a pixel is driven, the light passes without the polarization direction being changed. The polarizing plate on light outgoing side has a polarization characteristic of a direction orthogonal to the polarizing plate on light entering side.

Thus, the polarization direction of the light passed the pixels for which the liquid crystal panel changes the polarization direction by 90 degrees matches a transmission axis of the polarizing plate on light outgoing side. Thus, the light passed the pixels for which the liquid crystal panel changes the polarization direction by 90 degrees passes the polarizing plate on light outgoing side. On the other hand, the polarization direction of the light passed the pixels for which the liquid crystal panel does not change the polarization direction is orthogonal to the transmission axis of the polarizing plate on light outgoing side. Thus, the light passed the pixels for which the liquid crystal panel changes the polarization direction is absorbed by the polarizing plate on light outgoing side.

The light passed through the light valve portion **118** as such impinges upon the color composition optical system **122.** The light exit from the blue light valve unit **121** passes the green reflection dichroic mirror **123,** and the red reflection dichroic mirror **124** and impinges upon the projection optical system **126.** The light exit from the green light valve unit **120** is reflected by the green reflection dichroic mirror **123,** and then, passes the red reflection dichroic mirror **124** to impinge upon the projection optical system **126.** The light exit from the red light valve unit **119** is reflected by the total reflection mirror **125** and the red reflection dichroic mirror **124,** and impinges upon the projection optical system **126.** The projection optical system **126** expands the image on the light valves and projects on the screen **127.**

In the present embodiment having the above-described structure, the light source device **41'** includes the light shielding member **43.** Thus, the light shielding member **43** does not shield the effective light emitted from the light source device **41'** and can efficiently shield light incident on the sealing portion **45** of the discharge lamp of the reflected light which is reflected by the condenser lenses **115** through **117** and re-enters. As a result, temperature rise at the sealing portion **45** can be suppressed, and the reliability of the light source device **41'** is improved. Thus, a three-plate projection display device with high reliability can be realized.

### (Embodiment 11)

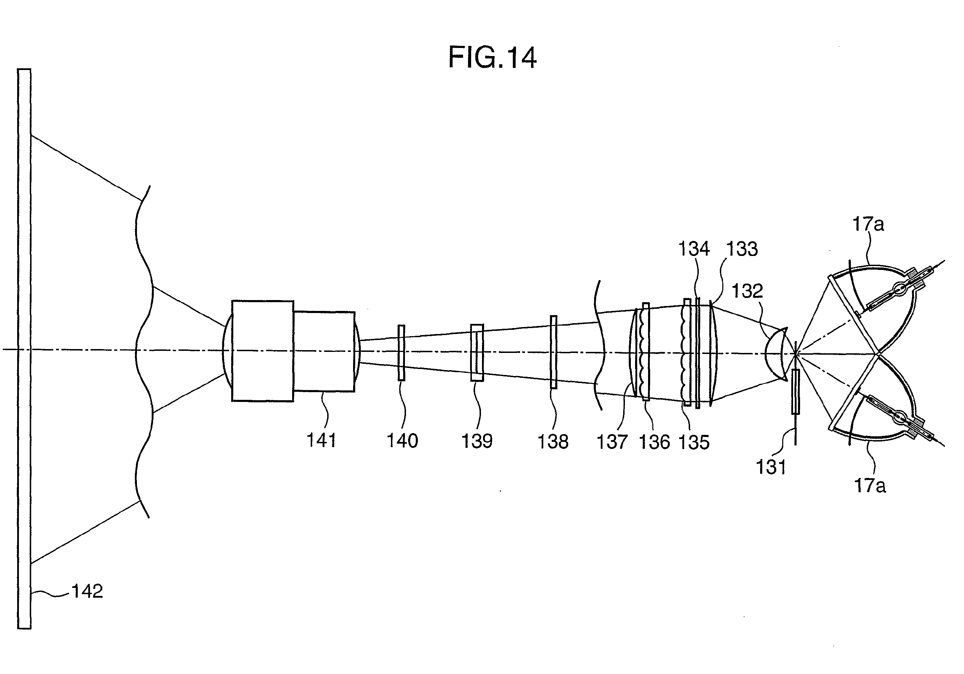

Figure **14** is a schematic diagram showing a structure of a display device according to Embodiment 11 of the present invention. The display device shown in Figure **14** is a projection display device using a plurality of light sources, which includes two light sources **17a,** a color selection member **131,** condenser lenses **132** and **133,** UV-IR cut filter **134,** a first lens array **135,** a second lens array **136,** a polarizer **138,** a transmissive liquid crystal panel **139** which is exemplary forming means, an analyzer **140,** and a projection optical system **141** which is exemplary projection means. The number of the light source is not limited to the above example, and three or more light sources may be used.

The light sources **17a** are respectively same as the light source **17a** shown in Figure **3,** has similar functions as the light shielding member **12a** shown in Figure **3.** Two light sources **17a** are placed such that their optical axes intersect at the second focus. At the intersection of their optical axes, the color selection member **131** is placed as shown in the figure. The color selection member **131** has a similar structure as the color selection member **62** shown in Figure **10.**

The light passes through the color selection member **131** become substantially parallel light after passing through the condenser lenses **132** and **133**. Then, the light passes through the UV-IR cut filter **134,** and impinges upon a first lens array **135** with a number of microlenses being formed.

A second lens array **136** is placed at the second light source position formed for the microlenses of the first lens array **135.** There are a number of microlenses placed at the position of the light source image to form the second lens array **136.** These microlenses are formed to expand the shape of the openings of the microlenses of the first lens array **135** and to project on the liquid crystal panel **139.** The images of the microlenses of the first lens array **135** are overlapped to have uniform illumination.

The light passed through the first lens array **135** and the second lens array **136** impinges upon the condensing lens **137.** The light passed through the condensing lens **137** impinges upon the polarizer **138.** At the polarizer **138,** a polarization light component in an absorption axis direction is absorbed and only a polarization light component in the orthogonal direction is transmitted and impinges upon the liquid crystal panel **139.**

The liquid crystal panel **139** is formed of a number of pixels which can be modulated independently based on an input signal from outside. Of the light impinges upon the liquid crystal panel **139,** light impinges upon the pixel portions which have to be displayed black have the polarization direction changed by 90 degrees when it passes and exits from the liquid crystal panel **139.** The light is set to be absorbed by the analyzer **140.** On the other hand, light impinges upon the pixel portions which have to be displayed white have the polarization direction being unchanged when it passes and exits from the liquid crystal panel **139.** The light passes through the analyzer **140** and impinges upon the projection optical system **141.** An image of the transmissive liquid crystal panel **139** is expanded and projected on the screen **142.**

In the present embodiment having the above structure, each of the light sources **17a** includes the light shielding member **12a.** Thus, the light shielding members **12a** do not shield the effective light emitted from the light source devices **17a** and can efficiently shield light incident on the sealing portion **15** (see Figure **3**) of the discharge lamp of the reflected light which is reflected by the color selection member **131** and re-enters. As a result, temperature rise at the sealing portion **15** can be suppressed, and the reliability of all the light sources **17a** is improved.

The present invention may be applied not only to the display device as described above but also to various devices using light sources such as exposure devices used for manufacturing a semiconductor and the like. The features of the above embodiments can be combined in any manner as necessary, and still the effects of such features can be achieved.

### INDUSTRIAL APPLICABILITY

The light source device according to the present invention can prevent the life of the light emitting means from being shortened due to returned light even under a use circumstance with the returned light to the light source device. Thus, the light source device with high reliability can be realized, and the light source device is applicable as a light source device using a discharge lamp or the like as light emitting means.

## Claims

1. A light source device, comprising:
light emitting means which serves as a light source;
reflecting means for reflecting light emitted from the light emitting means, and outputting the light to the outside; and
light shielding means for shielding at least a part of light, which is reflected and returns toward the light emitting means, of the light emitted from the reflecting means to the outside.

2. A light source device according to claim 1, wherein:
the light emitting means includes a discharge lamp;
the reflecting means includes condensing means for reflecting the light emitted from the discharge lamp and outputting the light to the outside such that the light emitted from the discharge lamp is condensed to a predetermined position; and
the light shielding means shields at least a part of light, which is reflected and returns toward the discharge lamp, of the light condensed and emitted to the outside by the condensing means.

3. A light source device according to claim 2, wherein the light shielding means is provided near an opening portion of the condensing means.

4. A light source device according to claim 2, wherein the light shielding means is placed between an opening portion of the condensing means and the discharge lamp.

5. A light source device according to claim 2, wherein the light shielding means is fixed to a lead wire of the discharge lamp which is positioned on an opening portion side of the condensing means.

6. A light source device according to claim 2, wherein the light shielding means is provided on an end portion of the discharge lamp which is positioned on an opening portion side of the condensing means.

7. A light source device according to claim 2, wherein the light shielding means covers a sealing portion of the discharge lamp which is positioned on an opening portion side of the condensing means.

8. A light source device according to any one of claims 2 through 7, further comprising absorbing means which is placed between the light shielding means and the discharge lamp and absorbs the light emitted from the discharge lamp.

9. A light source device according to claim 2, further comprising transmissive sealing means which is placed at the opening portion of the condensing means and forms a substantially sealed space inside the condensing means, wherein
the light shielding means is provided on the transmissive sealing means.

10. A light source device according to claim 9, wherein the light shielding means is provided on a surface of the transmissive sealing means on a side of the discharge lamp.

11. A light source device according to claim 9, wherein the light shielding means is provided on a surface of the transmissive sealing means on a side opposite to the discharge lamp.

12. A light source device according to claim 11, further comprising absorbing means which is provided on a surface of the transmissive sealing means on a side of the discharge lamp and absorbs the light emitted from the discharge lamp.

13. A light source device according to any one of claims 9 through 12, wherein the transmissive sealing means is a plane glass.

14. A light source device according to any one of claims 2 through 13, wherein the condensing means is an ellipsoidal mirror.

15. A light source device according to any one of claims 2 through 13, wherein the condensing means is a parabolic mirror.

16. A light source device according to claim 1, wherein:
the light emitting means includes a discharge lamp;
the reflecting means includes
first condensing means for reflecting the light emitted from the discharge lamp in predetermined directions, and
second condensing means for condensing the light emitted from the first condensing means to a predetermined position; and
the light shielding means shields at least a part of light, which is reflected and returns toward the discharge lamp, of the light condensed and emitted to the outside by the second condensing means.

17. A light source device according to claim 16, wherein the light shielding means is provided near the second condensing means.

18. A light source device according to claim 16, wherein the light shielding means is provided on the second condensing means.

19. A light source device according to claim 16, wherein the light shielding means is placed between the second condensing means and the discharge lamp.

20. A light source device according to any one of claims 16 through 19, wherein the first condensing means is a parabolic mirror.

21. A light source device according to any one of claims 16 through 19, wherein the first condensing means is an ellipsoidal mirror.

22. A light source device according to any one of claims 16 through 21, wherein:
the second condensing means is a plano-convex lens; and
the light shielding means is provided on a surface of the plano-convex lens on a side of the discharge lamp.

23. A light source device according to any one of claims 1 through 22, wherein the light shielding means is formed of a multilayer film which reflects at least one of infrared rays and ultraviolet rays.

24. A light source device according to any one of claims 1 through 23, wherein the light shielding means reflects visible light.

25. A light source device according to any one of claims 1 through 24, wherein the light shielding means is placed in an area with no light reflected by the reflecting means.

26. An illumination optical device, comprising:
a light source device according to any one of claims 2 through 25; and
light selecting means which is placed near a condensing position of light emitted from the light source device and selectively transmits light having a predetermined wavelength of the light emitted from the light source device.

27. A display device, comprising:
a light source device according to any one of claims 1 through 25;
forming means for forming an optical image corresponding to a video signal by using the light emitted from the light source device; and
projecting means for projecting the optical image formed by the forming means on a screen.

## Amended claims

### Amended claims under Art. 19.1 PCT

1. (Amended) a light source device, comprising:
light emitting means which serves as a light source;
first reflecting means for reflecting light emitted from the light emitting means, and outputting the light to the outside;
second reflecting means for reflecting at least a part of the light emitted from the first reflecting means to the outside; and
light shielding means for shielding at least a part of light, which is reflected by the second reflecting means and returns toward the light emitting means.

2. (Amended) A light source device according to claim 1, wherein:
the light emitting means includes a discharge lamp;
the first reflecting means includes condensing means for reflecting the light emitted from the discharge lamp and outputting the light to the outside such that the light emitted from the discharge lamp is condensed to a predetermined position; and
the light shielding means shields at least a part of light, which is reflected by the second reflecting means and returns toward the discharge lamp, of the light condensed and emitted to the outside by the condensing means.

3. A light source device according to claim 2, wherein the light shielding means is provided near an opening portion of the condensing means.

4. A light source device according to claim 2, wherein the light shielding means is placed between an opening portion of the condensing means and the discharge lamp.

5. A light source device according to claim 2, wherein the light shielding means is fixed to a lead wire of the discharge lamp which is positioned on an opening portion side of the condensing means.

6. A light source device according to claim 2, wherein the light shielding means is provided on an end portion of the discharge lamp which is positioned on an opening portion of the condensing means.

7. A light source device according to claim 2, wherein the light shielding means covers a sealing portion of the discharge lamp which is positioned on an opening portion side of the condensing means.

8. A light source device according to any one of claims 2 through 7, further comprising absorbing means which is placed between the light shielding means and the discharge lamp and absorbs the light emitted from the discharge lamp.

9. A light source device according to claim 2, further comprising transmissive sealing means which is placed at the opening portion of the condensing means and forms a substantially sealed space inside the condensing means, wherein the light shielding means is provided on the transmissive sealing means.

10. A light source device according to claim 9, wherein the light shielding means is provided on a surface of the transmissive sealing means on a side of the discharge lamp.

11. A light source device according to claim 9, wherein the light shielding means is provided on a surface of the transmissive sealing means on a side opposite to the discharge lamp.

12. A light source device according to claim 11, further comprising absorbing means which is provided on a surface of the transmissive sealing means on a side of the discharge lamp and absorbs the light emitted from the discharge lamp.

13. A light source device according to any one of claims 9 through 12, wherein the transmissive sealing means is a plane glass.

14. A light source device according to any one of claims 2 through 13, wherein the condensing means is an ellipsoidal mirror.

15. A light source device according to any one of claims 2 through 13, wherein the condensing means is a parabolic mirror.

16. (Amended) A light source device according to claim 1, wherein:
the light emitting means includes a discharge lamp;
the first reflecting means includes
first condensing means for reflecting the light emitted from the discharge lamp in predetermined directions, and
second condensing means for condensing the light emitted from the first condensing means to a predetermined position; and
the light shielding means shields at least a part of light, which is reflected by the second reflecting means and returns toward the discharge lamp, of the light condensed and emitted to the outside by the second condensing means.

17. A light source device according to claim 16, wherein the light shielding means is provided near the second condensing means.

18. A light source device according to claim 16, wherein the light shielding means is provided on the second condensing means.

19. A light source device according to claim 16, wherein the light shielding means is placed between the second condensing means and the discharge lamp.

20. A light source device according to any one of claims 16 through 19, wherein the first condensing means is a parabolic mirror.

21. A light source device according to any one of claims 16 through 19, wherein the first condensing means is an ellipsoidal mirror.

22. A light source device according to any one of claims 16 through 21, wherein:
the second condensing means is a plano-convex lens; and
the light shielding means is provided on a surface of the plano-convex lens on a side of the discharge lamp.

23. A light source device according to any one of claims 1 through 22, wherein the light shielding means is formed of a multilayer film which reflects at least one of infrared rays and ultraviolet rays.

24. A light source device according to any one of claims 1 through 23, wherein the light shielding means reflects visible light.

25. (Amended) A light source device according to any one of claims 1 through 24, wherein the light shielding means is placed in an area with no light reflected by the first reflecting means.

26. (Amended) An illumination optical device, comprising:
a light source device according to any one of claims 2 through 25, in which
the second reflecting means is light selecting means which is placed near a condensing position of light emitted from the light source device and selectively transmits light having a predetermined wavelength of the light emitted from the light source device.

27. A display device, comprising:
a light source device according to any one of claims 1 through 25;
forming means for forming an optical image corresponding to a video signal by using the light emitted from the light source device; and
projecting means for projecting the optical image formed by the forming means on a screen.

Statement under Art. 19.1 PCT
Claims 1, 2, and 16 are amended to clearly recite that second reflecting means reflects at least a part of light emitted from first reflecting means to the outside, and light shielding means shields at least a part of light which is reflected by the second reflecting means and returns toward light emitting means.

Cited reference 1 merely describes that a high-pressure lamp includes a light shielding tube. Cited reference 1 fails to disclose how the light shielding tube function, for example, what kind of light it shields.

In the present invention, light shielding means shields at least a part of light which is reflected by the second reflecting means and returns toward the light emitting means. In this way, life of the light emitting means can be prevented from being shortened by the returned light even under the use circumstance where there is returned light to the light source device. Thus, it becomes possible to provide a light source device with high reliability.

Claim 25 is amended so as to conform to the amendments of claims 1, 2, and 16 mentioned above. Claim 25 clearly recites that the light shielding means is placed in an area with no reflected light from the first reflecting means.

Claim 26 is amended so as to conform to amendments of claims 1, 2, and 16 mentioned above. Claim 26 clearly recites that the second reflecting means is placed near the condensing position of light emitted from the light source device, and is light selecting means for selectively transmitting light having a predetermined wavelength of the light emitted from the light source device
